**Europäisches Patentamt**

**European Patent Office**

**Office européen des brevets**

(19)

(11) Publication number: **0 142 861**
**B1**

(12) # EUROPEAN PATENT SPECIFICATION

(45) Date of publication of patent specification: **27.05.87**

(51) Int. Cl.⁴: **C 08 G 61/08**

(21) Application number: **84114040.3**

(22) Date of filing: **20.11.84**

(54) Method for making a cross-linked dicyclopentadiene polymer.

(30) Priority: **22.11.83 US 554467**

(43) Date of publication of application:
**29.05.85 Bulletin 85/22**

(45) Publication of the grant of the patent:
**27.05.87 Bulletin 87/22**

(84) Designated Contracting States:
**DE FR GB IT NL SE**

(56) References cited:
**EP-A-0 084 888**
**DE-A-2 343 093**

(73) Proprietor: **HERCULES INCORPORATED**
**Hercules Plaza**
**Wilmington Delaware 19894 (US)**

(72) Inventor: **Nguyen, Tuyen Thanh**
**6008 Stone Pine Road**
**Wilmington Delaware 19808 (US)**

(74) Representative: **Lederer, Franz, Dr. et al**
**Vanderwerth, Lederer & Riederer Patentanwälte**
**Lucile-Grahn-Strasse 22**
**D-8000 München 80 (DE)**

Courier Press, Leamington Spa, England.

EP 0 142 861 B1

# 0 142 861

**Description**

This invention relates to a method for the preparation of a cross-linked polymer of dicyclopentadiene with a metathesis catalyst system.

Crosslinked polymers of dicyclopentadiene (3a,4,7,7a - tetrahydro - 4,7 - methano - 1H - indene), hereinafter referred to as DCPD, are well suited for a wide variety of applications, particularly as an engineering plastic or foam.

One of the great advantages offered by poly(DCPD) is that the catalysis of DCPD monomer can be controlled so that a reaction mixture can be formed in one place and then the reaction mixture injected to a second place where polymerization occurs. A prime example of how this advantage is put to use is reaction injection molding (sometimes hereinafter referred to as RIM). Reaction injection molding is a process for inmold polymerization which involves the mixing of two or more low viscosity reactant streams in a mixing head. The combined streams are then injected into a mold where they quickly react to form a solid infusible mass. For a particular catalyst system to be of use with RIM and related processes, certain requirements must be met: 1) the individual reactant streams must be stable and must have a reasonable shelf-life under ambient conditions; 2) it must be possible to combine the reactant streams without their reacting in the mixing head; 3) when injected into the mold, the materials must react rapidly to form a solid; and 4) any additives incorporated into the catalyst system must not interfere with the above requirements.

It can be seen that in RIM or related processes the catalyst is critical. For a process to be of use in commercial situations the polymerization should occur quickly, but the polymerization cannot occur so quickly that the crosslinked polymer is formed before the combined reactant streams can be injected into the mold.

Moreover, if the desired product is a cellular crosslinked polymer, the formation of bubbles and their subsequent expansion must occur before the combined reactant streams begin to cross-link to any significant degree, but the foaming must occur after the combined reactant streams have developed a viscosity sufficient to support a foamed structure.

It is known in the prior art to polymerize cycloolefins with metathesis catalyst systems containing pentavalent tantalum catalysts and organoaluminum or organoaluminum halide activators. For example, U.S. Patent No. 3,684,781 discloses the preparation of cyclo-olefin polymers from cyclo-olefins and up to 30% by weight of bicyclic or polycyclic olefins, such as DCPD, norbornadiene or norbornene. Organometallic mixed catalysts are used, including compounds of metals of groups IVa, Va and VIa of the periodic system combined with compounds of metals of groups I to IV. Tantalum pentachloride and organoaluminum halide compounds are mentioned. Small quantities of 1-olefins must be added.

U.S. Patent No. 3,817,964 discloses the ring-opening polymerization of cyclopentene using catalysts consisting of reaction products of acetals with tungsten halides or tantalum halides, combined with organo compounds of metals of Groups Ia to IVa of the Periodic Table, preferably an organoaluminum compound. Organoaluminum halide compounds are mentioned.

U.S. Patent No. 3,492,278 discloses the preparation of an essentially gel-free elastomer from cyclopentene using catalysts comprising niobium or tantalum pentahalide and organoaluminum compounds. U.S. Patent No. 3,707,520 discloses the preparation of linear elastomers from cyclopentene and up to 20% by weight of a diolefin, including up to 20% of dicyclopentadiene, using catalysts comprising metals of Group Va or VIa of the Periodic Table (including tantalum pentachloride) with organoaluminum compounds as activators, including organoaluminum halides.

U.S. Patent 4,400,340 discloses a RIM process using a metathesis catalyst (preferably a tungsten-containing metathesis catalyst); an organoaluminum or organoaluminum halide activator; and a rate moderator, to form a crosslinked polymer.

The number of applications for crosslinked polymers of DCPD has been somewhat limited, however, because of the dark color and cloudy appearance that usually characterizes them. For such purposes, it is desirable to have available a transparent crosslinked polymer in which polymerizable units other than DCPD do not amount to more than about 20% of the DCPD units and that has a light color. It would also be advantageous if it could be made by a metathesis catalyst system that operates without a rate modifier.

According to the invention, a method for making such a transparent crosslinked DCPD polymer is provided, in which a reactant solution containing an organoaluminum or organoaluminum halide activator of a metathesis catalyst system is mixed with a reactant solution containing the catalyst of the metathesis catalyst system, at least one reactant solution containing dicyclopentadiene, the mixture being heated for a time sufficient for polymerization of the dicyclopentadiene, and which is characterized in that not more than 20% of the dicyclopentadiene units are replaced by other polymerizable units, and the catalyst is a pentavalent tantalum catalyst represented by the formula $Ta—Y_5$, in which $—Y$ is a halide, an alkoxy having the formula $—O—R$, in which the organic radical R is a hydrocarbyl containing from 1 to 10 carbon atoms, an aryloxy having the formula $—O—Ar$, in which the organic radical Ar is an aromatic radical containing from 1 to 3 aromatic rings, or an acyloxy having the formula $OOCR'$ in which the organic radical $R'$ is a hydrocarbyl containing from 1 to 10 carbon atoms.

Also according to the invention, there is provided a reactant solution mixture comprising: a) a reactant solution mixture containing an organoaluminum or organoaluminum halide activator of a metathesis-catalyst system, and b) a reactant solution mixture containing the catalyst of the metathesis-catalyst

2

system, at least one reactant solution mixture containing dicyclopentadiene, characterized in that not more than 20% of the dicyclopentadiene units are replaced by other polymerizable units, and the catalyst is a pentavalent tantalum catalyst represented by the formula Ta—$Y_5$, in which —Y is a halide, an alkoxy having the formula —O—R, in which the organic radical R is a hydrocarbyl containing from 1 to 10 carbon atoms, an aryloxy, having the formula —O—Ar, in which the organic radical Ar is an aromatic radical containing from 1 to 3 aromatic rings, or an acyloxy having the formula OOCR', in which the organic radical R' is a hydrocarbyl containing from 1 to 10 carbon atoms.

The crosslinked polymer is formed from at least 80% DCPD. The remaining 20% may be selected from DCPD and one or more other cycloolefin monomers containing from about five to about twelve carbon atoms. Examples of such cycloolefin monomers are norbornene, norbornadiene, cyclopentene, dimethanehexahydronaphthalene, and dimethaneoctahydronaphthalene. Preferably DCPD is the sole monomer, so that the crosslinked polymer is formed entirely from dicyclopentadiene.

The pentavalent tantalum catalyst, which forms one part of the metathesis catalyst system, has the effect of imparting a light color and good transparency to the resulting crosslinked polymer. Preferably —Y in the formula Ta—$Y_5$ represents a halide. The most preferred pentavalent tantalum catalyst is $TaCl_5$.

The tantalum catalyst preferably is in solution with the monomer or mixture of monomers to be polymerized. In a preferred embodiment, the catalyst is first added to a small amount of a solvent to form a slurry. The solvent must be one that does not react with the catalyst. Examples of suitable solvents are benzene, xylene, toluene, chlorobenzene, dichlorobenzene, trichlorobenzene and hexane. Sufficient solvent is added so that the catalyst concentration is between about 0.1 and 0.7 mole per liter of solvent.

The pentavalent tantalum catalyst is then made soluble in the slurry by the addition to the slurry of a small amount of a solubilizer. Representative solubilizers include alcohols, phenols, perfluoro acid anhydride and mixtures thereof. Alcohols or phenols are preferred. Suitable phenols include phenol, alkyl-phenols, and halogen containing phenols, with *tert*-butyl phenol, *tert*-octyl phenol and nonyl phenol being most preferred. Suitable alcohols include methanol, ethanol and decylalcohol. The preferred molar ratio of pentavalent tantalum catalyst to solubilizer is from about 1:1 to about 1:3.

The resulting catalyst solution is stirred and then a stream of a dry inert gas is blown through the solution to remove any gases which may be formed. Alternatively, a salt, such as a lithium or sodium phenoxide, can be added to the pentavalent tantalum catalyst slurry, the mixture stirred until essentially all the pentavalent tantalum catalyst is dissolved, and the precipitated inorganic salt removed by filtration or centrifugation. All of these steps should be carried out in the absence of moisture or air to prevent deactivation of the catalyst.

In some embodiments of the invention, it is desirable to increase the shelf-life of the catalyst solution. This is done by adding from about 1 to about 5 moles of a complexing agent such as a Lewis base or a chelant per mole of pentavalent tantalum catalyst to the pentavalent tantalum catalyst solution. Preferred Lewis bases include nitriles and ethers such as benzonitrile and tetrahydrofuran. Preferred chelants include acetylacetones and alkyl acetoacetates, where the alkyl group contains from one to ten carbon atoms. From about one to about five moles of complexing agent are added per mole of pentavalent tantalum catalyst in the solution. The improvement in the shelf-life of the pentavalent tantalum catalyst/monomer solution is obtained whether the complexing agent is added before or after the solubilizer is added.

The organoaluminum or organoaluminum halide activator, which forms the other part of the metathesis catalyst system, is preferably an alkylaluminum dihalide or dialkylaluminum halide in which the alkyl contains one to ten carbon atoms, or a mixture of such halides. In the more preferred activators, the alkyl is ethyl and the halide is chloride. The most preferred activator is diethylaluminum chloride.

Like the tantalum catalyst, the activator is preferably in solution with the monomer or mixture of monomers to be polymerized. It has been found that, in general, where a pentavalent tantalum catalyst is used in a RIM or related process there is no need to incorporate a rate moderator into the catalyst system. Using the catalyst system according to the invention, it is possible to combine the reactant streams in one place without causing a premature reaction before injection into a mold.

While there may be situations in which it is desirable to have the monomer or monomer mixture incorporated in just one stream, it is clearly preferable to have monomer in two streams, so that each part of the two-part metathesis catalyst system can be dissolved in monomer. Obviously more than two streams can be used, with the additional streams containing monomer, additives or both.

The components of the catalyst system of this invention are combined in such proportions that the resulting monomer to pentavalent tantalum catalyst ratio, on a molar basis, is from about 1,000:1 to about 10,000:1, preferably about 2,000:1 and the resulting activator to a pentavalent tantalum catalyst ratio is from about 2:1 to about 20:1, preferably about 10:1.

If a crosslinked polymeric foam is desired, a blowing agent is incorporated into the catalyst system. The blowing agent is incorporated into either or both parts of the metathesis-catalyst system, or it may be added to the monomer separately. The amount of blowing agent to be incorporated is from about 2 to about 30, preferably about 5 to about 20 percent by weight, based on the combined weight of the monomer and catalyst system.

Any of the conventional blowing agents used in RIM processes are employed provided that the blowing agent does not poison or otherwise adversely effect on the metathesis-catalyst system. Preferred blowing agents include low boiling organic compounds, i.e. compounds which are liquids under ambient

3

conditions but which are volatilized under the conditions at which polymerization occurs. Representative low boiling organic compounds include hydrocarbons such as pentane, and hexane; halogenated hydrocarbons such as methylene chloride and trichlorofluoromethane. Representative inert gases, which are added under pressure to the catalyst system, include nitrogen, argon and halogenated hydrocarbons such as dichlorodifluoromethane.

The exact amounts of catalyst, activator and when desired, blowing agent, to be incorporated into a given catalyst system will depend on the particular catalyst, activator, blowing agent and other additives chosen as well as the desired final product. The amounts will be readily determinable by one skilled in the art without undue experimentation following the teachings of this specification.

The cellular crosslinked polymer of this invention may be made and molded by RIM or related processes. The two parts of the metathesis-catalyst system are separately mixed with the other components to form separate stable solutions that are placed in separate vessels. These vessels provide the source for two separate streams that are combined in one place, such as the mixing head of a RIM machine, and then injected into a second place, such as a RIM mold, where polymerization takes place.

The time for polymerization is temperature dependent. As the temperature of the mold is increased the rate of formation of crosslinked polymer is also increased. At 25°C. it typically takes on the order of 20 minutes for the polymer to be formed. If the temperature of the mold is increased to 40°C., the polymer is typically formed in about 5 minutes and if the temperature of the mold is further increased to 60°C., the polymer is typically formed in less than about 2 minutes.

In the RIM process, the mixing head of the RIM machine typically has orifices about 0.81 mm (0.032 inch) in diameter and a jet velocity of about 122 m/s (400 ft/sec). After being combined, the mixture is injected into mold maintained from about 35° to about 100°C., preferably from about 50° to about 70°C. The mold pressure is in the range of about 10 to about 103.4 kPa. The polymerization reaction is exothermic.

In some embodiments of this invention, a preformed elastomer which is soluble in the reactant streams is added to the metathesis-catalyst system in order to increase the impact strength of the polymer. The elastomer is dissolved in either or both of the reactant streams in an amount from about 3 to about 15 weight percent range, based on the weight of monomer. Illustrative elastomers include natural rubber, butyl rubber, polyisoprene, polybutadiene, polyisobutylene, ethylenepropylene copolymer, styrene-butadiene-styrene triblock rubber, random styrene-butadiene rubber, styrene-isoprene-styrene triblock rubber and ethylene-propylene diene terpolymers. The amount of elastomer used is determined by its molecular weight and is limited by the viscosity of the resultant reactant streams. The resultant reactant streams containing elastomer cannot be so viscous that mixing is not possible. Although the elastomer can be dissolved in either one or both of the streams, it is desirable that it be dissolved in both.

In some embodiments, the reactant streams and consequently the final polymer may also contain other additives such as fillers. Representative fillers include glass wollastonite, mica, carbon black, talc, and calcium carbonate.

In those embodiments where a cellular structure is desired, a nucleating agent, such as calcium carbonate may be added to at least one of the reactant streams. The nucleating agent effects the structure of the foam by helping to make the cells small and uniform. Other suitable nucleating agents include talc, magnesium carbonate, barium carbonate, zinc carbonate, lead carbonate, magnesium oxide, calcium oxide, barium oxide, zinc oxide, lead oxide, and silica. Silica is preferred.

The best mode now contemplated of carrying out this invention is exemplified by the following working examples of preferred specific embodiments. This invention is not limited to these specific examples.

Catalyst preparation
Example A

Example A illustrates a preferred embodiment of preparing a nonylphenol solubilized tantalum pentachloride catalyst.

0.45 g (1.3 mmol) $TaCl_5$ is added to an oven-dried polytube in a dry box. 0.23 g (1.3 mmol) nonylphenol in 13 ml chlorobenzene which has been sparged with argon for 1 hour is added to the polytube. The mixture is sparged for 1 hour to remove the HCl produced. Finally, chlorobenzene is added to the polytube to restore the original chlorobenzene level. This results in a 0.1 molar solubilized catalyst solution.

Example B

Example B illustrates a preferred embodiment of preparing a trifluoroacetic acid anhydride solubilized tantalum pentachloride catalyst.

0.46 g (1.38 mmol) $TaCl_5$ is added to an oven-dried polytube in a dry box. 10 ml chlorobenzene is then added to the polytube to make a slurry. To this slurry is added 0.2 ml (1.4 mmol) trifluoro acetic acid anhydride. The $TaCl_5$ is dissolved and the solution is sparged with argon for 1 hour to remove HCl produced. Sufficient chlorobenzene is then added to the polytube to restore the original chlorobenzene level. This results in a 0.13 molar solubilized catalyst solution.

Example C

Example C illustrates a preferred embodiment of preparing an ethanol solubilized tantalum pentachloride catalyst.

0.55 g (1.5 mmol) is added to an oven-dried polytube in a dry box. 10 ml of chlorobenzene is then added to the polytube to make a slurry. 0.09 ml (1.5 mmol) ethanol is then added. The $TaCl_5$ is dissolved and the solution sparged with argon to remove HCl for 2 hours. This results in a 0.15 molar solubilized catalyst solution.

Example D

Example D illustrates a preferred embodiment of preparing a methanol solubilized tantalum pentachloride catalyst.

0.96 g (2.7 mmol) $TaCl_5$ is added to an oven-dried polytube in a dry box. 10 ml of chlorobenzene is then added to make a slurry. To this slurry is added 0.54 ml (13.3 mmol) methanol. The $TaCl_5$ is dissolved and the solution is sparged with argon to remove HCl for 2 hours. Sufficient chlorobenzene is then added to the polytube to restore the original chlorobenzene level. This results in a 0.26 molar solubilized catalyst solution.

Example E

Example E illustrates a preferred embodiment of preparing a methanol-ethanol solubilized tantalum pentachloride catalyst.

0.93 g (2.6 mmol) $TaCl_5$ is added to an oven-dried polytube in a dry box. 10 ml of toluene is then added to make a slurry. To this slurry is added 0.42 ml (10.4 mmol) methanol and the solution is sparged. After 1 hour, 0.15 ml (2.6 mmol) ethanol is added and the solution sparged an additional 2 hours with argon to remove HCl. Sufficient toluene is then added to the polytube to restore the original toluene level. This results in a 0.26 molar solubilized catalyst solution.

Example F

Example F illustrates a preferred embodiment of preparing a methanol-decyl alcohol solubilized tantalum pentachloride catalyst.

3.6 g (10.2 mmol) $TaCl_5$ is added to an oven-dried pop bottle in a dry box. 50 ml toluene and then 1.96 ml (10.2 mmol) decyl alcohol are then added to produce a homogeneous solution. The solution is stirred for 5 minutes and sparged with argon. Then 0.83 ml (20.4 mmol) methanol is added and the mixture sparged with argon for 2 hours to remove the HCl which is produced. Sufficient toluene is then added back to the pop bottle to produce a 0.21 molar solubilized catalyst solution.

Example G

Example G illustrates a preferred embodiment of preparing a methanol-nonylphenol solubilized tantalum pentachloride catalyst.

3.5 g (10 mmol) $TaCl_5$ is added to an oven-dried pop bottle in a dry box. 50 ml toluene and 2 ml (10 mmol) nonylphenol are added. The solution is stirred and sparged with argon for 10 minutes. 0.82 ml (20.2 mmol) methanol is added and the mixture sparged with argon for 2 hours to remove the HCl which is produced. Sufficient toluene is then added back to the pop bottle to restore the original level. This results in a 0.2 molar solubilized catalyst solution.

Polymerization

Examples 1—7

Examples 1—7 illustrate preferred embodiments of preparing crosslinked poly(DCPD) using a tantalum pentachloride catalyst, prepared as described above, and a diethyl aluminum chloride (DEAC) activator.

In each example, 1—7, a 15×125 mm test tube, capped with an unextracted rubber stopper, is sparged with nitrogen for 10 minutes. 5 ml (38 mmol) DCPD is then added and the test tube sparged for an additional 10 minutes. A tantalum pentachloride catalyst is then added by syringe. After inserting a thermocouple, DEAC is added by syringe and each test tube is then shaken several times to mix the components. The particular tantalum pentachloride catalyst solution and the molar ratio of monomer to tantalum to DEAC is shown in Table 1. Each test tube is then placed in a water bath, heated to 60°C. For each sample, the mixture rapidly reacts to form a polymer which visual inspection shows has little color and good transparency. In each example the change in temperature of the combined solutions ($\Delta T$) and the time until 1/2 exotherm (t1/2) was actually measured and is reported in Table 1. The exotherm is an indication of the rate and completeness of the polymerization. The quicker the time until the exotherm the quicker the reaction and the greater the exotherm the greater the degree of polymerization.

5

## TABLE 1

| Example | Catalyst | DCPD:Ta:DEAC Molar ratio | T | t1/2 |
|---------|----------|--------------------------|-------|-------------|
| 1 | A | 2000:1:3 | 170°C | 2 minutes |
| 2 | B | 8000:1:9 | 148°C | 45 minutes |
| 3 | C | 2000:1:3 | 168°C | 2.7 minutes |
| 4 | D | 2000:1:4 | 161°C | 1 minute |
| 5 | E | 2000:1:3 | 163°C | 1.5 minutes |
| 6 | F | 4000:1:6 | 156°C | 1.8 minutes |
| 7 | G | 3000:1:4.5 | 169°C | 1.4 minutes |

Example 8

Example 8 illustrates a preferred embodiment of preparing a crosslinked copolymer of dicyclopentadiene and dimethanehexahydronaphthalene using a tantalum pentachloride catalyst and a diethyl aluminum chloride (DEAC) activator.

In Example 8, a 15×125 mm test tube, capped with an unextracted rubber stopper, is sparged with nitrogen for 10 minutes. 38 mmol DCPD and 3.8 mmol dimethanehexahydronaphthalene are then added and the test tube sparged for an additional 10 minutes. A methanol solubilized tantalum pentachloride catalyst, prepared as outlined in Example D, is then added by syringe. DEAC is added by syringe and the test tube shaken several times to mix the components. The molar ratio of combined monomers to tantalum to DEAC is 2000:1:4. The test tube is then placed in a water bath, heated to 60°C. The mixture reacts to form a polymer which visual inspection shows has little color and good transparency.

Examples 9 and 10

Examples 9 and 10 illustrate preferred embodiments of preparing a crosslinked copolymer of DCPD and dimethaneoctahydronaphthalene using a tantalum pentachloride catalyst and a diethyl aluminum chloride (DEAC) activator.

In each example, 9 and 10, a 15×125 mm test tube, capped with an unextracted rubber stopper, is sparged with nitrogen for 10 minutes. Into one test tube is added 34 mmole DCPD and 3.4 mmole dimethaneoctahydronaphthalene (Example 9). Into a second test tube is added 34 mmol DCPD and 6.8 mmol dimethaneoctahydronaphthalene (Example 10). The test tubes are then sparged for an additional 10 minutes. The tantalum pentachloride catalyst is then added by syringe. DEAC is added by syringe and each test tube is shaken several times to mix the components. In each case the molar ratio of combined monomers to tantalum to DEAC is 2000:1:4. Each test tube is then placed in a water bath, heated to 60°C. In each example, the mixtures react to form a polymer which visual inspection shows has little color and good transparency.

Example 11

Example 11 illustrates a preferred embodiment of preparing a crosslinked copolymer of DCPD and norbornadiene using a tantalum pentachloride catalyst and a diethyl aluminum chloride (DEAC) activator.

In Example 11, a 15×125 mm test tube capped with an unextracted rubber stopper, is sparged with nitrogen for 10 minutes. 34 mmol DCPD and 3.4 mmol norbornadiene is then added and the test tube sparged for an additional 10 minutes. A tantalum pentachloride catalyst prepared as in Example F is then added by syringe. DEAC is added by syringe and the test tube shaken several times to mix the components. The molar ratio of monomer to tantalum to DEAC is 2000:1:3. The test tube is then placed in a water bath, heated to 60°C. The mixtures react to form a polymer which visual inspection shows has little color and good transparency.

Example 12

Example 12 illustrates a preferred embodiment of preparing a crosslinked copolymer of DCPD and norbornene using a tantalum pentachloride catalyst and a diethyl aluminum chloride (DEAC) activator.

In Example 12, a 15×125 mm test tube, capped with an unextracted rubber stopper, is sparged with nitrogen for 10 minutes. 34 mmol DCPD and 3.4 mmol norbornene is then added and the test tube sparged for an additional 10 minutes. A tantalum pentachloride catalyst, prepared as in Example G, is then added by syringe. DEAC is added by syringe and the test tube shaken several times to mix the components. The molar ratio of combined monomers to tantalum to DEAC is 2000:1:4. Each test tube is then placed in a

6

water bath, heated to 60°C. The mixtures react to form a polymer which visual inspection shows to have little color and good transparency.

## Example 13

Example 13 illustrates a preferred embodiment of preparing a crosslinked copolymer of DCPD and cyclopentene using a tantalum pentachloride catalyst, and a diethyl aluminum chloride (DEAC) activator.

In Example 13, a 15×125 mm test tube, capped with an unextracted rubber stopper, is sparged with nitrogen for 10 minutes. 34 mmol DCPD and 3.4 mmol cyclopentene are then added and the test tube sparged for an additional 10 minutes. A tantalum pentachloride catalyst, prepared as in Example G, is added by syringe. DEAC is added by syringe and each test tube is then shaken several times to mix the components. The molar ratio of combined monomers to tantalum to DEAC is 2000:1:4. The test tube is then placed in a water bath, heated to 60°C. The mixture reacts to form a polymer which visual inspection shows to have little color and good transparency.

## Example 14

This example illustrates a preferred embodiment of the synthesis of poly(DCPD) via reaction injection molding using a tantalum pentachloride catalyst and a diethyl aluminum chloride activator (DEAC).

Poly(DCPD) is made using a standard RIM machine manufactured by Accuratio Co. of Jeffersonville, Indiana. Into two tanks each having a volume of (2 gallons) 7,57 l is charged DCPD containing 6% by weight of a random styrene-butadiene rubber. The tanks are then closed and inerted with nitrogen. Sufficient $Et_2AlCl$ is transferred into one of the tanks to bring the $Et_2AlCl$ concentration to 0.0284 M. Next, to the other tank is added sufficient tantalum pentachloride catalyst, prepared as outlined in Example G, to provide a 0.0071 $M$ concentration. All transfers are done in a way to preclude the entrance of oxygen or moisture into the system. The materials are then thoroughly blended in their respective tanks.

The components of the two tanks are combined by a standard impingement type RIM mixhead. The ratio of the activator/monomer solution mixed with catalyst/monomer solution is 1:1. The impingement mixing is accomplished by passing both the solutions through orifices (0.032″) 0,8128 mm in diameter at a flow rate approximately 80 ml/sec. This required pumping pressure of approximately (1000 psi) $6,89476×10^6$ Pa.

The resulting mixture flows directly into a mold heated between 40°C. and 80°C. The mold is made out of chrome plated aluminum. The mold has a flat cavity which forms a plaque sample (10″×10″×1/8″) 254 mm×254 mm×3,175 mm thick. A clamping force of (1.5 tons) 14,946 N is used to keep the mold closed. A crosslinked polymer is formed.

## Claims

1. A method for making a crosslinked thermoset polymer containing units derived from dicyclopentadiene, in which a reactant solution containing an organoaluminum or alkylaluminum halide activator of a metathesis catalyst system is mixed with a reactant solution containing the catalyst of the metathesis-catalyst system, at least one reactant solution containing dicyclopentadiene and the mixture being heated for a time sufficient for polymerization of the dicyclopentadiene, is characterized in that not more than 20% of the dicyclopentadiene units are replaced by other polymerizable units, and the catalyst is a pentavalent tantalum catalyst represented by the formula Ta—$Y_5$, in which —Y is a) a halide, b) an alkoxy having the formula —O—R in which the organic radical R is a hydrocarbyl containing from 1 to 10 carbon atoms, c) an aryloxy having the formula —O—Ar in which the organic radical Ar is an aromatic radical containing from 1 to 3 aromatic rings, or d) an acyloxy having the formula OOCR′ in which the organic radical R′ is a hydrocarbyl containing from 1 to 10 carbon atoms.

2. A method as claimed in claim 1 further characterized in that the catalyst is a tantalum pentahalide.

3. A method as claimed in claim 2 further characterized in that the catalyst is tantalum pentachloride.

4. A method as claimed in claim 1, 2 or 3, further characterized in that at least one reaction stream contains up to about 20 percent, based on the weight of dicyclopentadiene, of one or more other cycloolefin monomers containing from about five to about twelve carbon atoms.

5. A method as claimed in claim 4, further characterized in that the other cycloolefin monomers are selected from the group consisting of norbornene, norbornadiene, cyclopentene, dimethanehexahydronaphthalene, and dimethaneoctahydronaphthalene.

6. A method as claimed in any of the preceding claims, further characterized in that at least one reactant stream contains an elastomer in amount from about 3 to about 15 weight percent based on the weight of the dicyclopentadiene.

7. A reactant solution mixture comprising: a) a reactant solution mixture containing an organoaluminum or organoaluminum halide activator of a metathesis-catalyst system, and b) a reactant solution mixture containing the catalyst of the metathesis-catalyst system, at least one of the reactant solution mixtures containing dicyclopentadiene, characterized in that not more than 20% of the dicyclopentadiene units are replaced by other polymerizable units, and the catalyst is a pentavalent tantalum catalyst represented by the formula Ta—$Y_5$, in which —Y is a) a halide, b) an alkoxy having the formula —O—R in which the organic radical R is a hydrocarbyl containing from 1 to 10 carbon atoms, c) an aryloxy having the formula —O—Ar in which the organic radical Ar is an aromatic radical containing from 1 to 3 aromatic rings, or d) an acyloxy having the formula OOCR′ in which the organic radical R′ is a hydrocarbyl containing from 1 to 10 carbon atoms.

8. A reactant solution mixture as claimed in claim 7, further characterized in that the catalyst is a tantalum pentahalide.

9. A reactant solution mixture as claimed in claim 8, further characterized in that the catalyst is tantalum pentachloride.

10. A reactant solution mixture as claimed in claim 7, 8 or 9, further characterized in that at least one reaction stream contains up to about 20 percent, based on the weight of dicyclopentadiene, of one or more other cycloolefin monomers containing from about five to about twelve carbon atoms.

11. A reactant solution mixture as claimed in claim 10, further characterized in that the other cycloolefin monomers are selected from the group consisting of norbornene, norbornadiene, cyclopentene, dimethanehexahydronaphthalene, and dimethaneoctahydronaphthalene.

12. A reactant solution mixture as claimed in any of the preceding claims 7 to 11, further characterized in that at least one of the reactant solution mixtures contains an elastomer in an amount from about 3 to about 15 weight percent based on the weight of the dicyclopentadiene.

13. A reactant solution mixture as claimed in any of the preceding claims 7 to 12, further characterized in that at least one of the reactant solution mixtures contains a blowing agent.

## Patentansprüche

1. Verfahren zur Herstellung eines vernetzten, wärmegehärteten Polymerisats mit von Dicyclopentadien abgeleiteten Einheiten, in welchem eine Reaktionsmittellösung, welche einen Organoaluminium- oder Alkylaluminiumhalogenidaktivator eines Metathesis-Katalysatorsystems enthält, mit einer Reaktionsmittellösung vermischt wird, welche den Katalysator des Metathesis-Katalysatorsystems enthält, wobei mindestens eine Reaktionsmittellösung Dicyclopentadien enthält und das Gemisch solange erhitzt wird, bis das Dicyclopentadien polymerisiert ist, dadurch gekennzeichnet, daß nicht mehr als 20% der Dicyclopentadieneinheiten durch andere polymerisierbare Einheiten ersetzt werden, und daß der Katalysator ein fünfwertiger Tantalkatalysator, dargestellt durch die Formel Ta—Y₅, ist, worin —Y a) ein Halogenid, b) ein Alkoxy der Formel —O—R, in welcher der organische Rest R ein Hydrocarbyl mit 1 bis 10 Kohlenstoffatomen ist, c) ein Aryloxy der Formel —O—Ar, in welcher der organische Rest Ar ein aromatischer Rest mit 1 bis 3 aromatischen Ringen ist, oder d) ein Acyloxy der Formel OOCR′ ist, in welcher der organische Rest R′ ein Hydrocarbyl mit 1 bis 10 Kohlenstoffatomen ist.

2. Verfahren nach Anspruch 1, weiter dadurch gekennzeichnet, daß der Katalysator ein Tantalpentahalogenid ist.

3. Verfahren nach Anspruch 2, weiter dadurch gekennzeichnet, daß der Katalysator ein Tantalpentachlorid ist.

4. Verfahren nach Anspruch 1, 2 oder 3, weiter dadurch gekennzeichnet, daß mindestens ein Reaktionsmittelstrom bis zu ca. 20 Prozent, bezogen auf das Gewicht von Dicyclopentadien, an einem oder mehreren anderen Cycloolefinmonomeren mit ca. 5 bis ca. 12 Kohlenstoffatomen enthält.

5. Verfahren nach Anspruch 4, weiter dadurch gekennzeichnet, daß die anderen Cycloolefinmonomere aus der Gruppe von Norbornen, Norbornadien, Cyclopenten, Dimethan-hexahydronaphthalin und Dimethanoctahydronaphthalin ausgewählt werden.

6. Verfahren nach einem der vorhergehenden Ansprüche, weiter dadurch gekennzeichnet, daß mindestens ein Reaktionsmittelstrom ein Elastomer in einer Menge von ca. 3 bis ca. 15 Gewichtsprozent, bezogen auf das Gewicht von Dicyclopentadien, enthält.

7. Reaktionsmittellösungsgemisch mit a) einem Reaktionsmittelösungsgemisch mit einem Organoaluminium- oder Organoaluminiumhalogenidaktivator eines Metathesis-Katalysatorsystems und b) ein Reaktionsmittellösungsgemisch mit dem Katalysator des Metathesis-Katalysatorsystems, wobei mindestens eines der Reaktionsmittellösungsgemische Dicyclopentadien enthält, dadurch gekennzeichnet, daß nicht mehr als 20% der Dicyclopentadieneinheiten durch andere polymerisierbare Einheiten ersetzt sind, und daß der Katalysator ein fünfwertiger Tantalkatalysator ist, dargestellt durch die Formel TA—Y₅, worin —Y a) ein Halogenid, b) ein Alkoxy der Formel —O—R, in welcher der organische Rest R ein Hydrocarbyl mit 1 bis 10 Kohlenstoffatomen ist, c) ein Aryloxy der Formel —O—Ar, in welcher der organische Rest Ar ein aromatischer Rest mit 1 bis 3 aromatischen Ringen ist, oder d) ein Acyloxy der Formel OOCR′ ist, in welcher der organische Rest R′ ein Hydrocarbyl mit 1 bis 10 Kohlenstoffatomen ist.

8. Reaktionsmittellösungsgemisch nach Anspruch 7, weiter dadurch gekennzeichnet, daß der Katalysator ein Tantalpentahalogenid ist.

9. Reaktionsmittellösungsgemisch nach Anspruch 8, weiter dadurch gekennzeichnet, daß der Katalysator Tantalpentachlorid ist.

10. Reaktionsmittellösungsgemisch nach Anspruch 7, 8 oder 9, weiter dadurch gekennzeichnet, daß mindestens ein Reaktionsmittelstrom, bis zu ca. 20% bezogen auf das Gewicht von Dicyclopentadien, an einem oder mehreren anderen Cycloolefinmonomeren mit ca. 5 bis 12 Kohlenstoffatomen, enthält.

11. Reaktionsmittellösungsgemisch nach Anspruch 10, weiter dadurch gekennzeichnet, daß die

**0 142 861**

anderen Cycloolefinmonomere aus der Gruppe von Norbornen, Norbornadien, Cyclopenten, Dimethan-hexahydronaphthalin und Dimethanoctahydronaphthalin ausgewählt sind.

12. Reaktionsmittellösungsgemisch nach einem der vorhergehenden Ansprüche 7 bis 11, weiter dadurch gekennzeichnet, daß mindestens eines der Reaktionsmittellösungsgemische ein Elastomer in einer Menge von ca. 3 bis ca. 15 Gewichtsprozent, bezogen auf das Gewicht von Dicyclopentadien, enthält.

13. Reaktionsmittellösungsgemisch nach einem der vorhergehenden Ansprüche 7 bis 12, weiter dadurch gekennzeichnet, daß mindestens eines der Reaktionsmittellösungsgemische ein Treibmittel enthält.

**Revendications**

1. Procédé pour la préparation d'un polymère reticulé thermodurci contenant des unités dérivées de dicyclopentadiène, dans lequel une solution de partenaire réactionnel contenant un organo-aluminium ou un halogénure d'alcoyle-aluminium servant d'activateur d'un système catalytique de métathèse est mélangée avec une solution de partenaire réactionnel contenant le catalyseur du système catalytique de métathèse, l'une au moins des solutions de partenaire réactionnel contenant du dicyclopentadiène, le mélange étant chauffé pendant un temps suffisant pour la polymérisation du dicyclopentadiène, caractérisé en ce que pas plus de 20% des unités de dicyclopentadiène sont remplacés par d'autres unités polymérisables et en ce que le catalyseur est un catalyseur au tantale pentavalent représenté par la formule Ta—$Y_5$, dans laquelle Y est: a) un halogéne, b) un groupement alcoxy de formule O—R, dans laquelle le radical organique R est un groupement hydrocarbyle contenant 1 à 10 atomes de carbone, c) un groupement aryloxy de formule O—Ar, dans laquelle le radical organique Ar est un radical aromatique contenant 1 à 3 noyaux aromatiques, ou d) un groupement acyloxy de formule OOCR', dans laquelle le radical organique R' est un groupement hydrocarbyle contenant 1 à 10 atomes de carbone.

2. Procédé selon la revendication 1, caractérisé en outre en ce que le catalyseur est un penta-halogénure de tantale.

3. Procédé selon la revendication 2, caractérisé en outre en ce que le catalyseur est le pentachlorure de tantale.

4. Procédé selon l'une quelconque des revendications 1 à 3, caractérisé en outre en ce que l'un au moins des courants de partenaires réactionnels contient jusqu'à 20% en poids, sur la base du poids de dicyclopentadiène, d'un ou de plusieurs autres monomères cyclo-oléfiniques contenant d'environ 5 à environ 12 atomes de carbone.

5. Procédé selon la revendication 4, caractérisé en outre en ce que les autres monomères cyclo-oléfiniques sont choisis dans le groupe constitué par le norbornène, le norbornadiène, le cyclopentène, le diméthanehexahydronaphtalène et le diméthaneoctahydronaphtalène.

6. Procédé selon l'une quelconque des revendications 1 à 5, caractérisé en outre en ce que l'un au moins des courants de partenaires réactionnels contient un élastomère dans une proportion d'environ 3 à environ 15% en poids sur la base du poids du dicyclopentadiène.

7. Mélange de solutions de partenaires réactionnels comprenant: a) un mélange de solutions de partenaires réactionnels contenant un organo-aluminium ou un halogénure d'organo-aluminium servant d'activateur d'un système catalytique de métathèse, et b) un mélange de solutions de partenaires réactionnels contenant le catalyseur du système catalytique de métathèse, l'un au moins des mélanges de solutions de partenaires réactionnels contenant du dicyclopentadiène, caractérisé en ce que pas plus de 20% des unités de dicyclopentadiène sont remplacés par d'autres unités polymérisables et en ce que le catalyseur est un catalyseur au tantale pentavalent représenté par la formule Ta—$Y_5$, dans laquelle Y est: a) un halogène, b) un groupement alcoxy de formule O—R, dans laquelle le radical organique R est un groupement hydrocarbyle contenant 1 à 10 atomes de carbone, c) un groupement aryloxy de formule O—Ar, dans laquelle le radical organique Ar est un radical aromatique contenant 1 à 3 noyaux aromatiques, ou d) un groupement acyloxy de formule OOCR', dans laquelle le radical organique R' est un groupement hydrocarbyle contenant 1 à 10 atomes de carbone.

8. Mélange de solutions de partenaires réactionnels selon la revendication 7, caractérisé en outre en ce que le catalyseur est un penta-halogénure de tantale.

9. Mélange de solutions de partenaires réactionnels selon la revendication 8, caractérisé en outre en ce que le catalyseur est le pentachlorure de tantale.

10. Mélange de solutions de partenaires réactionnels selon l'une quelconque des revendications 7 à 9, caractérisé en outre en ce que l'un au moins des courants de partenaires réactionnels contient jusqu'à 20% en poids, sur la base du poids de dicyclopentadiène, d'un ou de plusieurs autres monomères cyclo-oléfiniques contenant d'environ 5 à environ 12 atomes de carbone.

11. Mélange de solutions de partenaires réactionnels selon la revendication 10, caractérisé en outre en ce que les autres monomères cyclo-oléfiniques sont choisis dans le groupe constitué par le norbornène, le norbornadiène, le cyclopentène, le diméthanehexahydronaphtalène et le diméthaneoctahydronaphtalène.

12. Mélange de solutions de partenaires réactionnels selon l'une quelconque des revendications 7 à 11, caractérisé en outre en ce que l'un au moins des mélanges de partenaires réactionnels contient un élastomère dans une proportion d'environ 3 à environ 15% en poids sur la base du poids du dicyclopentadiène.

13. Mélange de solutions de partenaires réactionnels selon l'une quelconque des revendications 7 à 12, caractérisé en outre en ce que l'un au moins des mélanges de solutions de partenaires réactionnels contient un agent gonflant.